# EUROPEAN PATENT APPLICATION

(11) **EP 2 194 525 A1**
(43) Date of publication of application: **09.06.2010**
(21) Application number: 08291149.6
(22) Date of filing: 05.12.2008
(51) Int. Cl.: G10L 19/00, H04M 3/22, H04W 24/08

(54) **Conversational subjective quality test tool**

(71) Applicant: Alcatel Lucent, 75008 Paris (FR)
(72) Inventor: Tranquart, Nicolas, 75008 Paris (FR)
(74) Representative: Louiset, Raphael

(57) **Abstract**

A method for assessing quality of conversational speech between nodes of a communication network **(1),** comprising:
- establishing a voice communication session via the communication network **(1)** between a user at a user terminal **(2)** and a virtual subject system **(4),** the virtual subject system **(4)** and user terminal **(2)** being connected to the communication network **(1),** the user terminal enabling the user to communicate by voice with the virtual subject system **(4) ;**
- during the session, acting as a conversation partner in a voice conversation with the virtual subject system **(4),** the virtual subject system being equipped with a speech generation module **(42)** to enable speaking during the session and a voice recognition module **(41)** to enable interpreting speech of the user during the session; and
- assessing the quality of speech over the communication network based on the voice conversation during the session, the assessing being performed by the user.

## Description

### FIELD OF THE INVENTION

The present invention pertains to a method for speech quality assessment and more specifically to conversational tests for speech quality assessment of voice communications systems.

### BACKGROUND OF THE INVENTION

As component of the steady progress being made in the wireless/wireline telecommunications networks, voice and speech quality assessment of systems has gained in importance over last years. It focuses on processes that are connected with assessing the auditory quality of voice and speech throughout a telecommunication system. The word "assessment" refers, here, to measurement of system performance with respect to one or more criteria.

In fact, with the advent of new telecommunications technologies, the diversification of voice communications systems, such as over IP (Internet protocol), over ATM (Asynchronous Transfer Mode), over FR (Frame Relay), over PSTN (Public-Switched Telephone Network), over ISDN (Integrated Services Digital Networks), over mobile networks (GSM, WiMAX, UMTS, etc.) or over any hybrid combination (IP, ATM, FR, PSTN, ISDN, mobile networks) has engendered diverse degradation factors of speech quality such as packet loss, non-stationary noise, speech distortion, network jitter, etc. Hence, various means for speech quality assessment have been developed so as to reliably measure the overall speech quality and particular degradation factors. "Speech quality" is used here to refer to the result of a perception and judgment process on what is perceived as compared to what is expected, in other words, speech quality refers to the difference between what is emulated face-to-face and what is heard by using a voice communication system. It may be defined by descriptors, such as "excellent", "good", "fair", "poor" and "bad", or by numeral values per degradation factors or wholly.

Existing methods for such speech quality assessment can be grouped in two broad classes according to their speech quality metrics.

A first subjective approach is based on asking participants to test a telecommunication system under different types and/or amounts of degradation and to score the corresponding speech quality on a notation scale. In order to reduce the subjective effect caused by the individual participant, one can average the participant's scores. This leads to a mean opinion score (MOS), widely used as subjective metric.

Furthermore, the speech quality perception depends on the context in which the participant is placed, namely, listening context, talking context, or conversational context.

In a listening test, a participant listens to live or recorded audio signals made upon different types and/or amounts of degradation. Then, the participant establishes a relationship between what he perceives and what he/she expects. As criteria for the speech quality assessment in a listening test, one can consider the speech distortion (deformations of natural speech waveforms that produce sounds that cannot be articulated by human speakers), active state-to-quite state noise ratio (ratio of the level when speaking over the noise ratio when not speaking). Noticeably, other quality criteria can be considered such as loudness and intelligibility. Here, intelligibility means the comprehensibility of the speech, i.e., to allow hearing and understanding of the speaker to the satisfaction of the listener. The International Telecommunication Union (ITU) details in the recommendation P.800 how to conduct this test and how to note the speech quality. As examples of the speech quality notation, one can mention the Absolute Category Rating (ACR) method and the Degradation Category Rating (DCR) method.

In a talking test, one participant has to talk in one end of the voice communications system and the other participant listens to the speech coming from the other end of the voice communication system. Each participant is, then, conscious of whether there is perceptible echo (the reflection of the speaker's speech signal back to the origin with enough power and delay to make it audible and perceptible as speech) and whether the distant speaker is easily heard, readily understood and able to detect nuances in articulation. As an illustrative example, participants may assess the tested conditions with one of the method defined in recommendation P.800 of the ITU.

In a conversational test, each pair of participants engages in conversations through the voice communications system under test. In addition to the conditions encountered in the listening and talking contexts, a conversation test may comprise disruptions of conversational rhythms (caused by unusual long pauses between the time a user stop talking and the time that user hears a response) and speech degradation during two-way communication. Short Conversation Test scenarios have been created for this purpose by the ITU (P.800 and ITU-T P.805).

Unlike subjective approaches described above, a second class uses objective metrics and relies on a computation speech distortion either by using a reference model (intrusive approaches) or by monitoring the degraded traffic (non-intrusive approaches). As examples of the intrusive approaches, one can mention the PAQM, PSQM, PSQM+MNB, PAMS, PEAQ, TOSQA, TOSQA2100, EMBSD and PESQ. Non-intrusive approaches may be used for speech quality assessment in live networks. The ITU-T E-model is the most widely used non-intrusive voice quality assessment method.

Among all these techniques, those belonging to the second class are neither time-consuming nor cost-consuming. However, in terms of accuracy, their results usually need to be verified or confirmed by subjective methods. Furthermore, none of them evaluates the voice quality in a conversational context. Additionally, one objective metric that is robust under some conditions does not necessarily have the same performance under other conditions.

Conversely, subjective approaches perform accurately, because the quality assessment is given by human subjects. More specifically conversational tests take into account all the degradation factors and synthesize all the contexts of subjective approaches.

Hence, from a speech quality assessment point-of-view, conversational tests seem the most interesting tool among all the above cited approaches for the following reasons:
- the test situation reflects the concrete usage of telecommunications systems (specifically, almost all telecommunications technologies enable a conversation context, i.e., two-way communications.) ;
- a wider range of quality criteria can be jointly assessed as the conversational methods are affected by the degradation encountered in the listening methods, those encountered in talking methods, and those affecting the interactivity of the conversation (two-way communication) ;
- the test allows the users' perception to be obtained in a straightforward manner, because the response comes from persons who will be using the voice communications systems.

Accordingly, conversational test is the most credible vehicle for speech quality assessment. However, the advantages of such subjective method are counterbalanced by:
- the time demanded for such tests as they require the availability of each one of the conversation partners during the whole conversation period ;
- cost as they operate on live voice communication networks ;
- the availability of conversation partners at the end-points of the conversation channel of the voice communication system ;
- the speech quality assessment is path-dependent and typically should be tested again if the path between the two access points changes

These drawbacks may become more apparent from the following frequent examples.

The quality of voice communication services has become an important issue in the evolving online business. In fact, speech communication quality, as it is perceived by the provider or customer of goods, must meet a certain quality level so as to make it possible to correctly conduct a transaction. As an illustrative example, the proliferation of business transactions over a fixes or mobile phone using voice input/output may require an accurate conversational test before any financial transactions are conducted or any confidential data is delivered.

Distant users that want to participate in a voice communication system (VoIP, VoATM, VoFR, PSTN) in a live broadcasting event, such as a live television or radio program, may proceed by first participating in a conversational test in order to assess the speech quality before any live intervention.

If a called person is unavailable, several mobile telecommunication operators propose a service inviting the caller to leave a voice message following a tone signal regardless of the speech quality. This procedure may lead to incomprehensive voice message due to a speech distortion or a high noise level.

In the case of, as non-limiting examples, a high number of intermediate network nodes in a path relating conversation partners or a complex intermediate voice call data processing (coding, interleaving, etc) or an impairment of the communications network devices (electromagnetic noise, network resources unavailability, heterogeneous networks, etc) the speech quality may be degraded. Hence, telecommunications and data operators and manufacturers have to assess the speech quality regularly so as to maintain their customer satisfaction.

As a result, conversational tests are reliable for speech quality assessment of a communication system. But, their drawbacks, hereinbefore cited, affect their suitability.

### SUMMARY

Some embodiments provide methods and apparatus for accommodating controlled conversational method for speech quality assessment.

Some embodiments provide methods and apparatus for subjective speech quality assessment in a conversational context with only one person.

Some embodiments provide methods and apparatus enabling an end-user to assess the speech quality of voice communications systems in a conversational context without a second human partner.

Some embodiments provide the utilization of speech recognition and speech generation tools for speech quality assessment of a voice communication system.

Various embodiments relate to methods for assessing quality of conversational speech between nodes of a communication network, comprising:
- establishing a voice communication session via the communication network between a user at a user terminal and a virtual subject system, the virtual subject system and user terminal being connected to the communication network, the user terminal enabling the user to communicate by voice with the virtual subject system ;
- during the session, acting as a conversation partner in a voice conversation with the virtual subject system, the virtual subject system being equipped with a speech generation module to enable speaking during the session and a voice recognition module to enable interpreting speech of the user during the session; and
- assessing the quality of speech over the communication network based on the voice conversation during the session, the assessing being performed by the user.

Various embodiments relate to apparatus for testing a quality of conversational speech between nodes of a communication network, comprising:
- A virtual subject system equipped with a speech recognition module and a speech generation module and being configured to participate as a listener and a speaker in a voice conversation with a user in response to the user starting a communication session with the virtual subject system via a remote user terminal connected to the communication network; and
- wherein the virtual subject system is configured to recognize a speech assessment test to aid the remote user to evaluate a conversation quality over the communication network based on the voice conversation with the virtual subject system.

Advantageously, the user can assess the speech quality or the dependence of the speech quality on selected conditions of the connection.

### DESCRIPTION OF THE DRAWING

Figure 1 is a block diagram illustrating a voice communications system in which various embodiments of conversational test methods may be performed.
Figure 2 is a flow chart illustrating the procedure of the speech quality assessment in a conversational context according to the inventions.

While the Figures and the Detailed Description of Illustrative Embodiments describe some embodiments, the inventions may have other forms and are not limited to those described in the Figures and the Detailed Description of Illustrative Embodiments.

### DETAILED DESCRIPTION OF ILLUSTRATIVE EMBODIMENTS

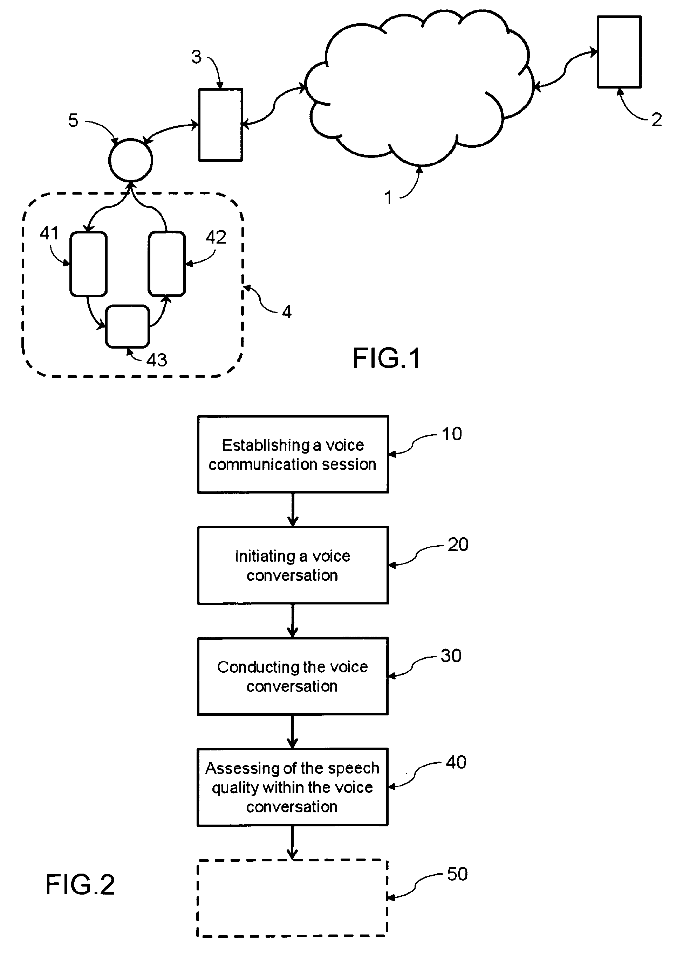

Various embodiments of methods described herein may be performed in the data communications system illustrated in Figure 1. The system includes:
- a communication network **1,** such as ISDN, PSTN and/or internet networks or any coordinated networks supporting at least voice communication service ;
- a user terminal **2** enabling at least voice communication over the communication network **1.** As non-limiting examples, the user terminal **1** may include a mobile or fixed phone, a PDA (Personnel Digital Assistant), or any other telephone configured to communicate via a packet-switched network (VoIP, VoATM, etc);
- a server **3** connected to the communications network **1.** As non-limiting example, the server **3** may be a user terminal **2 ;**
- a virtual subject system **4 ;**
- an acoustical or electric audio interface **5** for voice audio data scheduling and transmission.

The acoustical or electric audio interface **5** plays the role of a control and communications interface between the server **3** and the virtual subject system **4.**

The virtual subject system **4** comprises:
- a speech recognition module **41** able to interpret a speech ;
- a speech generator **42 ;**
- a control module **43** which may simulate different speech degradation factors and/or remote control the user terminal **2** and/or remote control the communication network **1.**

The virtual subject system **4** must have particular performances in terms of response time and rate under evaluated communication contexts.

Response time refers the time taken by the virtual subject system **4** to answer to its correspondent. This includes both the speech recognition time of what the correspondent says, and the time required for generating the response. Often speech recognition phase takes the majority of the response time.

Speech recognition rate, generally expressed as a percentage, refers to the ability of the speech recognition module **41** to recognize the received speech coming from the interface **5.**

According to the REC ITU-T G.114, the interactivity in a conversation is no longer assured if the response time exceeds 300ms (or equivalently, a maximal transmission one-way delay of 150ms). The maximum time for speech recognition by the speech recognition module **41** should be substantially lower than a preselected maximal one-way delay allowed by the voice communication system for interactive conversations.

The voice recognition module NUANCE 8.5, produced and commercialized by the company NUANCE, exposes a recognition time of around 20ms with Wordspotting and 50ms with simple sentence recognition (Natural Language Understanding). Hence, embodiments of virtual subject system **4,** which are provided with these types of speech recognition modules would be able to meet the time constraints of the REC ITU-T G.114.

A speech recognition module **41** with an insignificant response time, in comparison with 150ms, smoothly maintains the interactivity in the conversation. Furthermore, the response time is independent of the degradation factors whose impacts are tested by speech quality assessment.

The ratio between the response time of the speech recognition module **41** and the time of transmission through the communication path linking the user terminal **2** and the server **3** over the voice communications network **1** affects the speech quality assessment. The lower the ratio is, less the impact of speech recognition is on the assessment. A speech recognition module **41** having a response time about 1 ms or less should be suitable for many embodiments described herein regardless the time of transmission through the communication path linking the user terminal **2** and the server **3.**

During speech quality assessment, the speech recognition rate is preferably high, e.g. a rate at least 90% and preferably a rate of about 100%, whatever the degradation factors, so as to avoid interruptions in the controlled conversation between the virtual subject system **4** and a person using the user terminal **2.** The speech recognition module should also have a low response time. In particular, the module's response time should be low enough so that the virtual subject system **4** can control a voice conversation with a human conversational partner in a manner that will not perceivably reduce the interactivity of the voice conversation with to a human.

Advantageously, an advanced study performed by the Company Alcatel-Lucent on the voice recognition module NUANCE 8.5 ( Docman Document n° 3EU_29000_0045_UUZZA, "Etude du temps de réponse du CCivr 4625 associé au module de reconnaissance vocale Nuance 8.5", Docman Document n° 3EU_29000_0031_UUZZB, "Rapport d'étude de la relation entre taux de reconnaissance vocale Nuance et note PESQ sur architecture OXE IP Basic Link Gateway-Gateway en réseau IP perturbé") concluded that it is insensitive to different IP impairments (random and burst loss up 12%, jitter up to 200ms, and coupled loss and jitter) with a recognition rate for sentences of about 100%.

In embodiments in which speech recognition module **41** is the voice recognition module NUANCE 8.5 or any other equivalent product having similar performances or better in terms of time delay and recognition rate, the virtual subject system **4** can straightforwardly replace a person in a conventional test, regardless of the transmission time through the communication path linking the virtual subject system **4** and the user terminal **2.**

The speech generator **42** includes:
- a text-to-speech (TTS) generator that is able to convert any text into spoken words; and/or
- a voice audio file generator.

In the case of speech quality assessment under different conditions of connection between two nodes of a communication network **1,** the control module **43** allows to vary one or more conditions of the communication connection between the first node (user terminal **2**) and the second node (sever **3**) so that the user of the user terminal **2** can evaluate the quality of the conversational speech for different conditions of the connection.

The control module **43** is able to simulate the effect of different degradation factors, simultaneously or individually, on the established voice conversation. For example, the control module **43** allows adding a noise with different level, applying a speech distortion, simulating an echo, etc. The control module **43** is able to remote control the user terminal **2** and/or the communication network **1,** for example by changing the voice coding.

The assessment conversation between the user terminal **2** and the virtual subject system **4** over the network **1** may be an appropriate controlled dialogue, in other words, it may be selected from a predefined Short Conversation Test (SCT) scenarios. Such conversations are referred to as controlled conversations, because they are not free or spontaneous conversations between users.

Different types of Short Conversation Test (SCT) Scenarios have been described in the literature (ITU-T Rec P.805, Wiegelmann-1997, Möller-2000) wherein conversation partners have their respective roles. The corresponding test scenarios represent real-life telephone scenarios like reserving a plane ticket, ordering a pizza, etc. Short Conversation Test scenarios lead to natural and balanced conversations of a short duration.

Short Conversation Test scenarios allow the recreation of all phases included in a classical conversation, namely, listening, talking and two-way communication phase that include interruptions by participants of the conversation.

One can also distinguish in the literature rather unrealistic conversation test scenarios like playing games over the phone to reading random numbers as fast as possible (Kitawaki and Itoh -1991). The use of plays has the advantage of easier setting up of the recognition module **41**, however requires anticipated implementation of mutual interruptions.

The use of interactive short conversation scenarios as defined in the REC ITU-T P.805 requires the implementation of a voice recognition module with a sophisticated grammar, and preferably with an implementation of naturally occurring interruptions.

The virtual subject system **4** is called "virtual" as the subject **4** is a machine that plays the role of the second person in a conventional conversational test.

Advantageously, interruptions between the person and the virtual subject system **4** may be managed on the virtual subject system **4** side by implementing a Voice Activity Detection (VAD) module, not represented in the accompanying figure.

A Voice Activity Detection may be easily implemented on the interface **5** to detect whether the current frame (input/output) is an interval in which speech is being received or is an interval in which speech should be transmitted and controls the virtual subject **4** accordingly (forward, mute, etc.).

The speech quality assessment may be subjectively made by the person using the user terminal **2**. Certainly, this assessment may be expressed in function of categorized subjective descriptors such as "excellent", "good", "fair", "poor", "bad" or assigning a numeral values to each of the subjective descriptors or expressing its global impression and satisfaction concerning the used system.

Moreover, this conversational test may assess the overall speech quality or the speech quality per degradation factor.

Referring now the figure **2**, the speech quality assessment may be achieved as follow:
- establishing (**10**) a voice communication session between the user terminal **2** and the server **3**. This session may be initiated, directly or intermediately, by the user terminal **2** or by the server **3** ;
- initiating (**20**) a voice conversation between the virtual subject system **4** and the user of the user terminal **2**. The voice conversation initiation permits to select a voice conversation scenario from a list of plays or a list of Short Conversation Test Scenarios. It also permits to define the conditions of connections under which the conversational speech will be assessed.
- conducting (**30**) the voice conversation between the user of the user terminal **2** and the virtual subject system **4**, according to the selected conversation scenario and the connection conditions ;
- assessing (**40**) the speech quality within the voice conversation by the user of the user terminal **2**. The assessment of the speech quality may be done along the voice conversation, at the end of the voice conversation or both;
- a further step (**50**) may be added to the preceding ones and may consist of any action based on the speech quality assessment results such as: forwarding the communication session, closing the communication session, etc.

The step of initiating (**20**) a voice conversation may be skipped by defining a default conversation scenario and/or default connection conditions.

During the voice conversation initiation (**20**), the virtual subject may invite the user of the user terminal **2** to choose a conversation scenario from a predefined list of conversation scenarios and one or more connection conditions from a predefined list of connection conditions.

The predefined list of conversation scenarios may include Short Conversation Test (SCT) scenarios, play scenarios or attributes. The attributes are to be transmitted to the user in order for him to assess values of the attributes during the voice conversation.

As soon as the voice communication session is initiated, the speech recognition module **41** configures the control module **43** according to the selected connection conditions. In another embodiment, no connection conditions need to be applied. In this case, the control module **43** is passive.

When the user of the user terminal **2** speaks within the voice conversation, his speech is channelled to the voice recognition module **41** to be interpreted.

The recognition of the speech of the user of the user terminal **2** by the speech recognition module **41** launches the speech generator **42** (a voice audio file generator or a text-to-speech generator) to generate a speech which is linked to the recognized user speech under the simulated connection conditions by the control module **43**.

## Claims

1. A method for assessing quality of conversational speech between nodes of a communication network (**1**), comprising:
- establishing a voice communication session via the communication network (**1**) between a user at a user terminal (**2**) and a virtual subject system (**4**), the virtual subject system (**4**) and user terminal (**2**) being connected to the communication network (**1**), the user terminal enabling the user to communicate by voice with the virtual subject system (**4**) ;
- during the session, acting as a conversation partner in a voice conversation with the virtual subject system (**4**), the virtual subject system being equipped with a speech generation module (**42**) to enable speaking during the session and a voice recognition module (**41**) to enable interpreting speech of the user during the session; and
- assessing the quality of speech over the communication network based on the voice conversation during the session, the assessing being performed by the user.

2. The method of claim 1, **wherein** the assessing of the quality of speech is expressed by descriptors and/or numeral values.

3. The method of claim 1, **wherein** the voice conversation is a predefined conversation test scenario.

4. The method of claim 1 or 3, **wherein** the voice conversation is a Short Conversation Test (SCT) scenario or a play scenario.

5. A method for testing a quality of speech between nodes of a communication network (**1**), comprising:
- establishing a voice communication session with a user at a remote terminal (**2**) via the communication network, the communication session being between a virtual subject system (**4**) and the user at the remote terminal (**2**), the virtual subject system (**4**) and user terminal (**2**) being connected to the communication network (**1**) ;
- during the session, participating in a voice conversation with the user, the act of participating being performed by the virtual subject system (**4**), the virtual subject system being equipped with a speech generation module (**42**) and a voice recognition module (**41**) such that the virtual subject system (**4**) can operate as a conversation participant ; and
- wherein the virtual subject system is configured to aid the user to make an assessment of the quality of conversational speech over the communication network.

6. The method of claim 5, **wherein** the virtual subject system does not assess the quality of speech during the conversation.

7. The method of claim 5, **wherein** the virtual subject system transmits a list of attributes to the user such that the user can assess values of the attributes during the voice conversation.

8. The method of claim 5, **wherein** the virtual subject system is configured to vary one or more conditions of the communication connection during the session so that the user can evaluate the quality of the conversational speech for different conditions of the connection.

9. An apparatus for testing a quality of conversational speech between nodes of a communication network (**1**), comprising:
- a virtual subject system (**4**) equipped with a speech recognition module (**41**) and a speech generation module (**42**) and being configured to participate as a listener and a speaker in a voice conversation with a user in response to the user starting a communication session with the virtual subject system (**4**) via a remote user terminal connected to the communication network; and
- wherein the virtual subject system is configured to recognize a speech assessment test to aid the remote user to evaluate a speech quality over the communication network based on the voice conversation with the virtual subject system (**4**).

10. The apparatus of claims 9, **wherein** the virtual subject system is not able to assess the quality of speech during the conversation.

11. The apparatus of claim 9, wherein the virtual subject system is configured to transmit a list of attributes to the user such that the user can assess values of the attributes during the voice conversation.

12. The apparatus of claim 9, **wherein** the virtual subject system is configured to vary one or more conditions of the communication connection during the session so that the user can evaluate the quality of conversational speech for different conditions of the connection.

13. The apparatus of claim 9, **wherein** the speech recognition module (**41**) has a speech recognition rate of at least 90% and a response time low enough to not substantially reduce the perceived interactivity in the voice conversation.
